# EUROPEAN PATENT SPECIFICATION

(11) **EP 3 055 354 B1**
(45) Date of publication and mention of the grant of the patent: **05.12.2018**
(21) Application number: 14815948.6
(22) Date of filing: 10.10.2014
(51) Int. Cl.: C08K 5/00, C08G 65/00, C08L 71/12

(54) **VARNISHES AND PREPREGS AND LAMINATES MADE THEREFROM**
LACKE UND PREPREGS UND DARAUS HERGESTELLTE LAMINATE
VERNIS ET PRÉIMPRÉGNÉS ET STRATIFIÉS FABRIQUÉS À PARTIR DE CEUX-CI

(30) Priority: 11.10.2013 US 201361889837 P
(43) Date of publication of application: 17.08.2016
(73) Proprietor: Isola USA Corp., Chandler, AZ 85226 (US)
(72) Inventor: HE, Guroen, Chandler, AZ 85225 (US); AMLA, Tarun, Chandler, AZ 85225 (US)
(74) Representative: Rushton, David John
(86) International application number: PCT/US2014/060126
(87) International publication number: WO 2015/054626

(56) References cited:
- EP-A2- 0 382 312
- US-A1- 2012 315 814

## Description

### BACKGROUND OF THE INVENTION

### (1) Field of the Invention

This invention relates to varnish compositions used to make laminates and prepregs that are then used to manufacture printed circuit boards. This invention also is directed to laminates and prepregs made from the varnish compositions of this invention. The varnish compositions of this invention produce prepregs and laminates that possess excellent electrical performance suitable for high frequency application in electronics, as well as excellent thermal and mechanical performance and especially excellent peel strengths.

### (2) Description of the Art

With operating frequencies of electronic devices ever increasing, the dielectric constant (DK) and dielectric dissipation factor (DF) of the resin substrate used in the printed circuit boards associated with the electronic devices is becoming more important. The lead-free technology in soldering process driven by tighter and tighter environment restriction also requires better thermal stability of the resin substrate. Traditional thermosetting resin systems like phenolic resins and epoxy resins are beginning to show the limitations when incorporated into high dielectric constant and/or high dielectric dissipation factor electronic substrates.

Resins useful in the manufacture of printed circuit boards are disclosed, for example in the following U.S. patents: 5,218,030, 5,223,568, 5,571,609, 6,306,963, 6,352,783, 6,617,398 and 7,090,924. Some of the listed patents disclose technology which can produce low DF materials but usually has low Tg and high thermal expansion (although may not be mentioned in the patent). This kind of materials can be used only on double sided or only few layers laminates for high frequency application, like antennas. Some patents disclose technology that can produce a material with high Tg, while their DF is not low enough for very high frequency application. Others disclose technologies that are useful in preparing good final performance products but cannot be used to make dry B-stage glass prepreg for most PCB manufacturers. US 2012/0315814 A1 discloses a varnish with multiple ingredients, wherein a reactive monomer is present in an amount ranging from 2-10wt%.

The trend of the electronics industry requires materials not only with low DK and DF for high frequency application, but also good mechanical and thermal properties for multilayer board application. High Tg low thermal expansion and good thermal stability are primary importance for multilayer board application. Therefore, a need continues to exist for thermosetting resin compositions that are useful in manufacturing prepregs and laminates with excellent electrical performance for high frequency application while retaining desirable thermal and mechanical performance like high Tg, low CTE, high thermal stability, as well as low process temperature and being able to make non-sticky, non-tacky B-stage prepreg for conventional multilayer board fabrication.

### SUMMARY OF THE INVENTION

The present invention is defined in and by the appended claims.

The present invention is directed to compounded varnishes made with synthesized base resins or with commercially available raw resins and prepregs and laminates made from the compounded varnishes.

Described herein are varnish compositions comprising: a polymer selected from the group consisting of polyphenylene ether, polyphenylene oxide and combinations thereof; at least one reactive monomer; and at least one initiator.

Also described herein are varnish compositions comprising: from about 30 to about 60 wt% of at least one polyphenylene oxide polymer having the following formula: 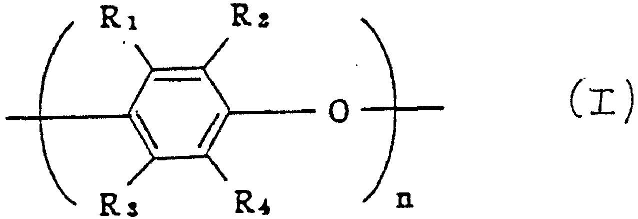 where R₁, R₂, R₃ and R₄ may be individually selected from hydrogen and a C₁ to C₄ alkyl group wherein n is an integer ranging from 1 to 100; from about 15 to about 35 wt% triallyl cyanurate; from about 0.5 to about 3 wt% of at least one initiator selected from the group consisting of benzoyl peroxide, dicumyl peroxide, 2,5-Dimethyl-2,5-di-t-butylperoxyhexyne, 2,5-Dimethyl-2,5-di-t-butylperoxyhexane and combinations thereof; from about 5 to about 50 wt% of at least one flame retardant selected from 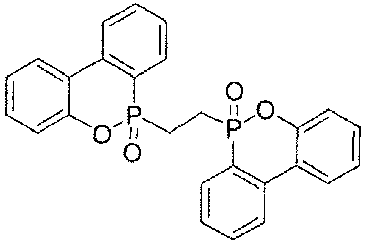 and
decabromodiphenyl ethane; and from greater than 0 to about 30 wt% of at least one silica filler.

Further described herein are prepregs, laminates, and resin coated copper sheets manufactured using the varnishes of this invention.

### DESCRIPTION OF CURRENT EMBODIMENTS

This invention is directed generally to varnishes made from a plurality of ingredients as well as to prepregs and laminates made using the varnishes of this invention.

Varnishes of this invention are made by a "compounding" process where a resin ingredient is combined with other ingredients to form a thermosetting varnish. The varnish is then used to manufacture a laminate. The varnish can be used to manufacture a laminate by "impregnating" a core material such as a woven glass fabric with the varnish. Alternatively, the varnish can be used to coat a copper sheet to form a resin coated copper sheet in which the resin is partially or fully cured. In another aspect of this invention, the varnish can be used to form a prepreg or laminate sheet that does not have a core material. The products made from the varnishes of this invention are useful as a prepreg - i.e., a product in which the varnish has been partially cured or "b-staged". The products made from the varnishes of this invention are also useful where the varnish is in a completely cured or "c-staged" form. The ingredients used to formulate the varnishes of this invention are discussed in more detail below. Unless stated otherwise, the composition ingredient weight percent ranges and varnish ingredient weight percent ranges are reported on a "dry" - solvent free basis.

The ingredients and optional ingredients of varnishes useful in the present invention are discussed in more detail below.

### Polyphenylene ether (PPE)/Polyphenylene Oxide (PPO)

A first ingredient of the varnishes of this disclosure is polyphenylene ethers or polyphenylene oxide polymers. Polyphenylene ether and polyphenylene oxide refers to the same general composition having the following formula: 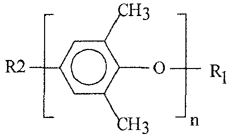 where the terminal groups - R₁ and R₂ can be hydrogen, methacrylate or acrylate group and wherein n is an integer ranging from 1 to 100 and preferably from 1 to 50. When the molecular weight of PPE is lower than 5000, it can be directly added into the varnish at room temperature. When PPE or PPO have molecular weight is higher than 5000, the varnish may need to be heated to 50°C or higher to dissolve it.

Polyphenylene oxide has the following general formula: 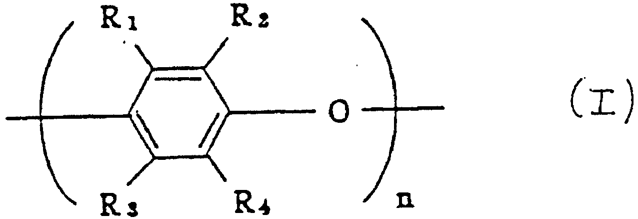 Where R₁, R₂, R₃ and R₄ may be individually selected from an alkyl group, preferably a C₁ to C₄ alkyl while the terminal groups may be any low electronegative end group including, but not limited to OH, methacrylate or acrylate with methacrylate being a preferred end group. In the composition above, n is an integer ranging from 1 to about 100 and preferably 1 to 50.

An example of a polyphenylene oxide is 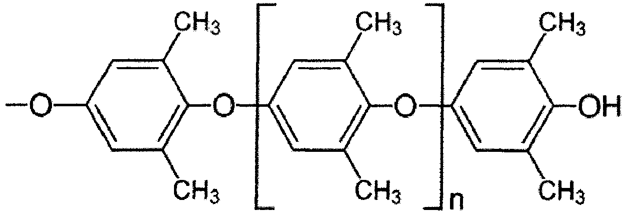 The polyphenylene oxide for use in accordance with the present invention is: 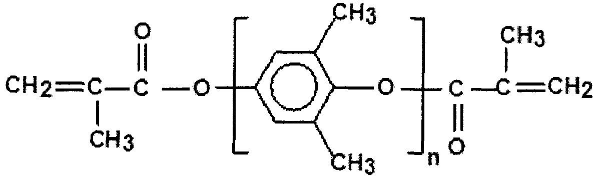 where n is an integer ranging from 1 to about 100 and more preferably 1 to 50.

The molecular weight of PPO used in varnishes of this invention may range from about 1000 to about 5000 or more. Additional examples of useful PPOs and PPEs can be found in U.S. patent no. 6,897,282.

In accordance with the present invention, PPO is present as an ingredient of a compounded varnish in an amount ranging from about 30 to about 60 wt%.

### Reactive Monomers

The varnish compositions of this disclosure may include one or more reactive monomers. Reactive monomer(s) may be any monomer that contains one or more carbon-carbon double bonds that can react with the unsaturated polyolefin resin. Suitable chemical reactivity is the first consideration. Examples of useful reactive monomers include styrenic monomers such as styrene, bromo-styrene, dibromostyrene, divinylbenzene, pentabromobenzyl acrylate, trivinylcyclohexane, triallyl isocyanurate, triallyl cyanurate, triacrylate isocyanurate and combinations thereof. In the present invention, the at least one reactive monomer is triallyl cyanurate.

The reactive monomer is present in the varnish composition in an amount ranging from about 15 to about 35 wt% and more narrowly from about 15 to about 25 wt%.

### Flame Retardants

The compounded varnishes of this invention may include one or more flame retardants.

Phosphor flame retardants may include, for example, a derivative of 9,10-Dihydro-9-oxa-10 phosphaphenanthrene-10-oxide (DOPO) 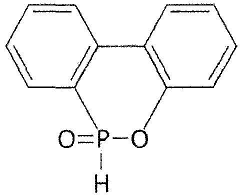 having the following formula:

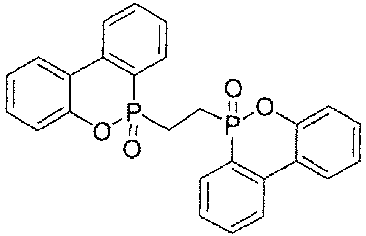

In one preferred embodiment, the flame retardant is the solid flame retardant decabromodiphenylethane, which has the following structure:

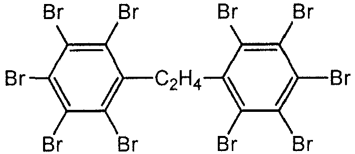

Decabromodiphenylethane is commercially available, for example, from Albemarle Corporation (451 Florida St., Baton Rouge, LA 70801). The Albemarle product is sold as Saytex™ 8010. Decabromodiphenylethane also unexpectedly improves the dielectric properties of the cured resin composition. As a result, decabromodiphenylethane can be included in the resin compositions in amounts far greater than is necessary for a flame retardant in order to also enhance the dielectric properties of the cured resin. Another useful high bromine content insoluble flame retardant is ethylenebistetrabromophthalimide which is sold as Saytex BT93W by Albemarle Corporation. Other similar useful flame retardants include decabromodiphenyl oxide and brominated polystyrene.

Solid flame retardants, such as Saytex 8010, etc. can create varnish formulation and use issues. Some potential issues with using a solid "filler-type" flame retardant include poor penetration into glass fiber bundles, poor via filling, lower peel strength, etc. We have discovered that one way to avoid some of these issues is to use a reactive and solvent soluble brominated flame retardant. Examples of such reactive and soluble brominated flame retardants include pentabromobenzyl acrylate, dibromostyrene, bromo-styrene and mixtures thereof.

The one or more flame retardants will be present in the varnish compositions of this invention in an amount sufficient to allow laminates made from the varnish compositions to pass the UL-94 flammability test. In general, the one or more flame retardants or combinations thereof may be present in the varnishes of this invention in an amount ranging from about 5% to about 50%, or from about 20 % to about 45 % on a dry weight basis.

### Initiators/Catalysts

Either peroxide or azo-type polymerization initiators (catalysts) can be used in resin compositions to perform a variant of functions such as encouraging homopolymerization and/or crosslinking varnish ingredients and to be available during varnish thermosetting to enhance the rate of resin cure. The initiators/catalysts chosen may be any compound that is known to be useful in resin synthesis or curing whether or not it performs one of these functions.

One example of useful initiators for use in the present invention are peroxide compounds. In the present invention at least one initiator is selected from the list consisting of benzoyl peroxide (BPO) and dicumyl peroxide (dicup) 2,5-Dimethyl-2,5-di-t-butylperoxyhexyne (DYBP), and 2,5-Dimethyl-2,5-di-t-butylperoxyhexane. Another class of useful initiators is azo-type initiators such as azobisisobutyronitrile (AIBN).

The amount of initiator used depends upon its application. When used in a varnish, the initiator will be present in an amount ranging from about 0.5 to about 3.0wt%.

In an alternative embodiment, the initiator is present in the varnish in an amount ranging from about 1% to 2% based upon 100 % of reactive component. By "reactive component" we mean an amount of peroxide is based on 100 parts of reactive component, such as PPO + TAC and not including non-reactive components such as inorganic fillers, non-reactive flame retardant, etc.

### Solvents

One or more solvents are typically incorporated into the varnish compositions of this invention in order to solubilize the appropriate varnish composition ingredients, and or to control varnish viscosity, and/or in order to maintain the ingredients in a suspended dispersion. Any solvent known by one of skill in the art to be useful in conjunction with thermosetting resin systems can be used. Particularly useful solvents include methylethylketone (MEK), toluene, dimethylformamide (DMF), or mixtures thereof.

When used, solvents are present in the varnish in an amount of from about 20 % to about 50 % as a weight percentage of the total weight of the composition.

### Optional Ingredients

### (a) Fillers

One or more fillers can optionally be added to the resin compositions of this invention to improve mechanical, chemical and electrical properties of the cured resin. Examples of properties that can be modified with fillers include, but are not limited to, coefficient of thermal expansion, increasing modulus, and reducing prepreg tack. Non-limiting examples of useful fillers include particulate forms of Teflon®, Rayton®, talc, quartz, ceramics, particulate metal oxides such as silica, titanium dioxide, alumina, ceria, clay, boron nitride, wollastonite, particulate rubber, PPO/PolyPhenylene Oxide and mixtures thereof. Preferred fillers include calcined clay, fused silica and combinations thereof. Yet other preferred fillers are silane treated silica and reclassified silica. When used, fillers are present in the compounded varnish of this invention in an amount from greater than 0 % to about 40 wt%, preferably from greater than 0 to about 30 wt%, based on the cumulative dry weight or solvent free weight of the varnish ingredients. Greater than 0 to about 30 wt% of at least one silica filler is present in the varnish composition.

### (b) Tougheners

The thermosetting resin compositions of this invention may include one or more tougheners. The tougheners are added to the resin compositions to improve the drillability of the resulting composites and laminates. Useful tougheners include methyl methacrylate/butadiene/styrene copolymer, methacrylate butadiene styrene core shell particles, and mixtures thereof. A preferred toughener is methacrylate butadiene styrene core shell particles, which is available from Rohm & Haas (100 Independence Mall West, Philadelphia, PA), sold under the trade name Paraloid®. When used, tougheners are present in the thermosetting resin compositions of this invention in an amount from about 1 % to about 5 %, preferably from about 2 to about 4 %, based on 100 % by weight solids of the composition.

### (c) Adhesion Promoters

To improve the adhesion of the resin to copper foil, other optional monomers can be added into the synthesis or into the varnish during compounding. Such monomers are unsaturated functional monomers including those containing urethane, amino or urea groups such as: 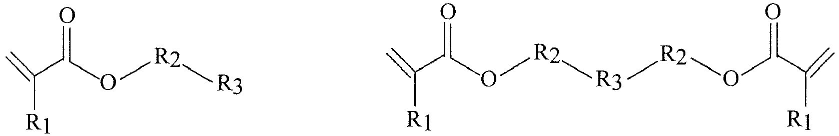 where R₁ can be H or C₁ to C₃ alkyl group, R₂ can be C₁ to C₄ alkyl group and R₃ can be one or more urethane group, amino group or urea group, such as diurethane dimethacrylate, dimethylaminoethyl methacrylate or methacrylamide, etc.

When adhesion promoters are incorporated into the compounded varnish, they will be present in an amount ranging from about 1 to about 20 wt% and more narrowly for about 5 to about 10 wt% on a dry basis.

### (d) Other Optional Ingredients

Optionally, the compounded varnish may also contain other additives such as defoaming agents, leveling agents, dyes, and pigments. For example, a fluorescent dye can be added to the resin composition in a trace amount to cause a laminate prepared therefrom to fluoresce when exposed to UV light in a board shop's optical inspection equipment. A useful fluorescent dye is a highly conjugated diene dye. One example of such a dye is UVITEX® OB (2,5-thiophenediylbis(5-tert-butyl-1,3-benzoxazole), available from Ciba Specialty Chemicals, Tarrytown, New York.

Other optional ingredients known by persons of skill in the art to be useful in resins that are used to manufacture printed circuit board laminates may also be included in the resin compositions of this invention.

### Prepregs and Laminates

The varnishes described above are useful for preparing prepregs and/or laminates used to manufacture printed circuit boards. In order to be useful in manufacturing printed circuit boards the laminates can be partially cured or b-staged in which state they can be laid up with additional material sheets and pressed under pressure and temperature to form a multilayer c-staged or fully cured laminate sheet. Alternatively, the varnishes can be used in the manufacture of individual c-staged or fully cured material sheets.

In one useful processing system, the varnish compositions of this invention are useful for making prepregs in a batch or in a continuous process. Prepregs are generally manufactured using a core material such as a roll of woven glass web (fabric) which is unwound into a series of drive rolls. The web then passes into a coating area where the web is passed through a tank which contains the thermosetting varnishes of this invention, solvent and other components where the glass web becomes saturated (impregnated) with the varnish. The varnish saturated glass web is then passed through a pair of metering rolls which remove excess varnish from the saturated glass web and thereafter, the varnish coated web travels the length of a drying tower for a selected period of time until the solvent is evaporated from the web. A second and subsequent coating of varnish can optionally be applied to the web by repeating these steps until the preparation of the prepreg is complete whereupon the prepreg is wound onto roll The woven glass web can replaced with a woven fabric material, paper, plastic sheets, felt, and/or particulate materials such as glass fiber particles or particulate materials.

In another process for manufacturing prepreg or laminate materials, thermosetting varnishes of this invention are premixed in a mixing vessel under ambient temperature and pressure. The viscosity of the pre-mix can vary but is preferably ∼ 600 - 1000 cps and can be adjusted by adding or removing solvent from the resin. Fabric substrate (typically but not limited to E glass) is pulled through a dip tank including the premixed varnish, through an oven tower where excess solvent is driven off and the prepreg is rolled or sheeted to size, layed up between Cu foil in various constructions depending on glass weave style, resin content & thickness requirements.

The thermosetting varnish (resin) mix can also be applied in a thin layer to a Cu foil substrate (RCC - Resin Coated Copper) using slot-die or other related coating techniques.

The varnishes, prepregs and resin coated copper foil sheets described above can be used to make laminates in batch or in continuous processes. In exemplary continuous process for manufacturing laminates of this invention, a continuous sheet in the form of each of copper, a prepreg and a thin fabric sheet are continuously unwound into a series of drive rolls to form a layered web of fabric, adjacent to the resin prepreg sheet which is adjacent to a copper foil sheet such that the prepreg sheet lies between the copper foil sheet and the fabric sheet The web is then subjected to heat and pressure conditions for a time that is sufficient to cause the varnish to migrate into the fabric material and to completely cure the varnish. In the resulting laminate, the migration of the varnish material into the fabric causes the thickness of the resin layer (the distance between the copper foil material and the fabric sheet material to diminish and approach zero as combination layers discussed above transforms from a web of three layers into a single laminate sheet. In an alternative to this method, a single prepreg sheet can be applied to one side of the fabric material layer and the combination sandwiched between two copper layers after which heat and/or pressure is applied to the layup to cause the varnish material to flow and thoroughly impregnate the fabric layer and cause both copper foil layers to adhere to the central laminate.

In still another embodiment, the resin coated copper sheets can be made at the same time the laminate is being made by applying a thin coating of varnish to two different continuously moving copper sheets, removing any excess varnish from the sheets to control the resin thickness and then partially curing the varnish under heat and/or pressure conditions to form a sheet of b-staged resin coated copper. The sheet(s) of b-staged resin coated copper can then be used directly in the laminate manufacturing process.

In yet another embodiment, the fabric material - with or without prior pretreatment - can be continuously fed into a varnish bath such that the fabric material becomes impregnated with the varnish. The varnish can be optionally partially cured at this stage in the process. Next, one or two copper foil layers can be associated with the first and/ or second planar surface of the varnish impregnated fabric sheet to form a web after which heat and/or pressure is applied to the web to fully cure the varnish to form a copper clad laminate.

### Example 1

Laminates were prepared from 2116 glass cloth using the two varnish formulations of this invention and electrical and mechanical properties of the laminates were determined. The varnish was applied to 2116 glass cloth in a treater at a varnish temperature of from about 300-320°F (148.9-160°C) and allowed to remain in the treater for from about 3-5 min. and then partially cured.

A layup including six layers of partially cured varnish impregnated woven glass cloth and copper foil on the outside surface(s) was prepared and the combination was fully cured in a press operating at a temperature of about 370-390°F (187.8-198.9°C) and a pressure of about 300 psi (2068.4kPa) for 90-120 min. to form a fully cured copper clad laminate. The cured varnish coated glass sheet material had a resin (varnish) content of from about 51-53 wt% - the remainder being the weight of the woven glass cloth.

The varnishes used and the test results are reported in the Tables 1-3 below.

**Table 1 - Varnish Formula A**

| **Component** | **Component Weight** | **Solid weight %** |
|---|---|---|
| Polyphenylene oxide | 35 | 52 |
| Triallyl cyanurate | 18 | 27 |
| Saytex 8010 | 13 | 20 |
| Dicumyl peroxide | 0.53 | 0.8 |
| Toluene | 29 | |
| Dimethylformamide | 4 | |
| Total | 100 | 100 |

**Table 2 - Varnish Formula B**

| Component | Component Weight | Solid weight % (dry) |
|---|---|---|
| Polyphenylene oxide | 33 | 49 |
| Triallyl cyanurate | 17 | 25 |
| XP7866 | 16 | 25 |
| Dicumyl peroxide | 0.50 | 0.75 |
| Toluene | 30 | |
| Dimethylformamide | 4 | |
| Total | 100 | 100 |

| | | |
|---|---|---|
| Note: XP-7866 is a halogen-free flame retardant. | | |

**Table 3 - Laminate Physical Properties**

| Properties | | Unit | Varnish A | Varnish B |
|---|---|---|---|---|
| Tg by DMA | | °C | 200∼210 | 200∼210 |
| DK | 10 GHz | | 3.3 ∼ 3.5 | 3.5 ∼ 3.7 |
| DF | 10 GHz | | 0.0030 ∼ 0.0035 | 0.0035 ∼ 0.0045 |
| T-288 | | Min | 60 | 60 |
| CTE | (20 - 288 °C) | ppm/°C | 65 ∼ 75 | 60 ∼ 70 |
| Z% expansion | (50 - 250 °C) | % | 3.2 ∼ 3.5 | 2.7 ∼ 3.3 |
| Peel strength | 0.5 oz reverse treated | Lb/in | ∼4.5 | ∼4.0 |
| | 1 oz reverse treated | | ∼5.5 | ∼5.5 |
| | VLP-2-1 Oz | | ∼5.8 | ∼4.5 |
| | VLP-2-1/2 Oz. | | ∼4.7 | ∼5.8 |
| Solder float time to failure | | Second | 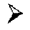 1000 | 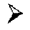 1000 |
| Flammability | | | UL V-0 | UL V-0 |

### Example 2

This example evaluated two varnish compositions of this invention wherein the first varnish composition (composition C) included triallyl isocyanurate as the reactive monomer the second varnish composition (composition D) included triallyl cyanurate as the reactive monomer. Both varnish compositions were used to form a laminate in accordance with the method described in Example 1. Each laminate was evaluated for DF and copper peel strength. The varnish compositions and physical properties are reported in Table 4 below.

**Table 4**

| | C | D |
|---|---|---|
| PPO | 66 | 66 |
| TAC | 34 | |
| TAIC | | 34 |
| Saytex 8010 | 30 | 30 |
| Dicup | 2 | 2 |
| DF | 0.0055 | 0.0077 |
| Peel | 5.6 | 4.6 |

The DF and peel strength of laminates prepared by varnishes C and D indicate that varnish D, including triallyl cyanurate has a lower DF and better peel strengths in comparison to the laminate made with varnish D and including triallyl isocyanurate as the reactive monomer.

### Example 3

This example evaluated the physical properties of laminates made with varnish compositions including increasing amounts of the peroxide initiator 2,5-Di(tert-butylperoxy)-2,5-dimethyl-3-hexyne (DYBP) on laminate DF. Varnish compositions E-I were used to form a laminate in accordance with the method described in Example 1. The laminates prepared from varnishes E-I were evaluated for DF. The varnish compositions and DF are summarized in Table 5 below.

**Table 5**

| | E | F | G | H | I |
|---|---|---|---|---|---|
| PPO | 50 | 50 | 50 | 50 | 50 |
| TAC | 25 | 25 | 25 | 25 | 25 |
| Flame retardant | 30 | 30 | 30 | 30 | 30 |
| DYBP | 6 | 5 | 4 | 3 | 2 |
| DYBP % of Reactive Component | 3.0 | 2.5 | 2.0 | 1.5 | 1.0 |
| DF | 0.0083 | 0.0072 | 0.0064 | 0.0060 | 0.0051 |

The data indicates that the loading of peroxide has a significant impact of DF. A 1% loading appears the best. Lower than 1% or higher than 2% will give unacceptable DF performance. (Note: here 1% or 2% is based on 100 % of reactive component (PPO), not the total solid)

### Example 4

This example evaluated the impact of the ratio of the weight amount of PPO to the weight amount of triallyl cyanurate in a varnish on T-260, T28 and 50-250 expansion properties. Varnish compositions J to N were formulated and included PPO and TAC in the weight ratios reported below. In addition, each varnish included the following ingredients and amounts: PPO and TAC total 100 parts; brominated flame retardant - 25 parts; peroxide 1 part. Varnish compositions J-N were used to form a laminate in accordance with the method described in Example 1. The laminates prepared using each of varnishes J-N were evaluated for expansion at different conditions. The varnish compositions and expansion results are summarized in Table 6 below.

**Table 6**

| | J | K | L | M | N |
|---|---|---|---|---|---|
| PPO : TAC | 2 | 2.3 | 3 | 4 | 5 |
| Expansion in T-260 test (%) | 2.8 | 2.9 | 3.9 | 4.7 | 4.9 |
| Expansion in T-288 test (%) | 5.2 | 5.3 | 7.0 | 8.8 | 7.5 |
| Expansion in 50-250 C (%) | 2.9 | 3.2 | 3.3 | 3.5 | 3.6 |

It is apparent from Table 6 that the PPO:TAC ratio has an impact on laminate properties such as thermal expansion. Higher expansion of PPO/TAC gives higher thermal expansion. The ratio of PPO:TAC also affects resin flowability. Higher ratios give lower resin flowability and thus poorer prepreg quality. Thus, a PPO:TAC ratio of from about 1 to 3 provides the best overall results.

### Example 5

This example evaluated the impact of the flame retardant selection on laminate physical properties. Varnish compositions O and P were formulated with varnish O including a copolymer of DBS/TAC as the flame retardant and varnish P including Saytex 8010 (decabromodiphenylethane) - a solid insoluble flame retardant. Each varnish included Varnish composition O included 29 wt% of a copolymer of DBA/TAC, while varnish P included 20 wt% Saytex 8010 (decabromodiphenyl ethane). The other ingredients of varnishes O and P included PPO/TAC at a ratio of 2:1 and 1% peroxide.

Varnish compositions O and P were used to form a laminate in accordance with the method described in Example 1. The laminates prepared using each of varnishes O and P were evaluated for peel, expansion at 288°C, for Tg and for DF. The varnish compositions and expansion results are summarized in Table 7 below.

**Table 7**

| Flame retardant | Copolymer of DBS/TAC | Saytex 8010 filler |
|---|---|---|
| Peel | 4.6 | 4.1 |
| Expansion in T-288 test | 5.7 | 6.6 |
| Tg by DMA | 214 | 219 |
| DF | 0.0039 | 0.0041 |

The laminate physical properties in Table 7 above demonstrate that laminates in which the flame retardant is a copolymer of DBS/TAC have certain physical properties that are equal to or better than laminates prepared using the inert solid flame retardant Saytex 8010.

### Example 6

This example evaluated the impact of the flame retardant selection on laminate physical properties. Varnish compositions Q and R were formulated with varnish Q including a phosphate-based flame retardant and varnish R including Saytex 8010 (decabromodiphenylethane) - a solid insoluble flame retardant. The varnish formulations are reported in Tables 8-9 below.

**Table 8 - Halogen-Free Formula (Q)**

| Component | Component Weight | Solid weight % |
|---|---|---|
| Polyphenylene oxide | 33 | 49 |
| Triallyl cyanurate | 17 | 25 |
| DOPO derivative | 16 | 25 |
| Dicumyl peroxide | 0.50 | 0.75 |
| Toluene | 30 | |
| Dimethylformamide | 4 | |
| Total | 100 | 100 |

**Table 9 - Brominated Formula (R)**

| Component | Component Weight | Solid weight % |
|---|---|---|
| Polyphenylene oxide | 35 | 52 |
| Triallyl cyanurate | 18 | 27 |
| Saytex 8010 | 13 | 20 |
| Dicumyl peroxide | 0.53 | 0.8 |
| Toluene | 29 | |
| Dimethylformamide | 4 | |
| Total | 100 | 100 |

**Table 10 - Laminate Performance**

| Properties | | Unit | Varnish Q | Varnish R |
|---|---|---|---|---|
| Tg by DMA | | °C | 200∼210 | 200∼210 |
| DK | 10 GHz | | 3.5∼3.7 | 3.3 ∼ 3.5 |
| DF | 10 GHz | | 0.0035 ∼ 0.0045 | 0.0030 ∼ 0.0035 |
| T-288 | | Min | 60 | 60 |
| Z% expansion | (50 ∼ 250 °C) | % | 2.7 ∼ 3.3 | 3.2 ∼ 3.5 |
| Peel strength | 0.5 oz reverse treated | Lb/in | ∼4.0 | ∼4.5 |
| | 1 oz reverse treated | | ∼5.5 | ∼5.5 |
| | VLP-2- 1 Oz | | ∼4.5 | ∼5.8 |
| | VLP-2-1/2 Oz. | | ∼5.8 | ∼4.7 |
| Solder float time to failure | | Second | 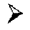 1000 | 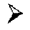 1000 |
| Flammability | | | UL V-0 | UL V-0 |

The laminate performance data reported in Table 10 above indicates that laminates prepared from varnishes Q and R produce laminates having very similar properties with the laminate prepared using varnish Q having slightly superior properties in some instances.

### Example Glossary

- PPO:: Polyphenylene oxide, same as PPE (Polyphenylene ether)
- TAC:: Triallyl cyanurate
- TAIC:: Triallyl isocyanurate
- Dicup:: Dicumyl peroxide
- DYBP:: 2,5-Di(tert-butylperoxy)-2,5-dimethyl-3-hexyne
- T-260:: A test method to check how long a laminate fails at 260 C (minute)
- T-288:: A test method to check how long a laminate fails at 288 C (minute)
- VLP:: Very low profile (copper foil)

## Claims

1. A varnish composition comprising:
a polyphenylene oxide polymer having the following formula: 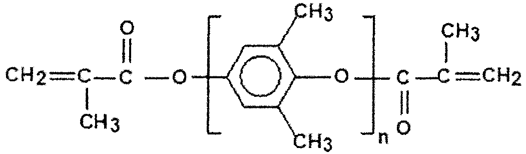
wherein n is 1 to 100;
from 15 to 35 wt% on a dry basis of at least one reactive monomer; and
at least one initiator;
and wherein in the composition there is:
from 30 to 60 wt% of the polyphenylene oxide polymer;
from 0.5 to 3 wt% of the at least one initiator which is selected from the group consisting of benzoyl peroxide, dicumyl peroxide, 2,5-Dimethyl-2,5-di-t-butylperoxyhexyne, 2,5-Dimethyl-2,5-di-t-butylperoxyhexane and combinations thereof;
from 5 to 50 wt% of at least one flame retardant selected from 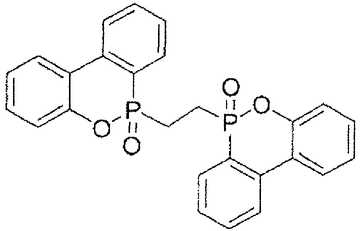 and
decabromodiphenyl ethane; and
from greater than 0 to 30 wt% of at least one silica filler;
wherein in the composition the at least one reactive monomer is triallyl cyanurate and the weight ratio of the polyphenylene oxide polymer to triallyl cyanurate ranges from 1.0 to 3.0.

2. The varnish composition of claim 1 wherein the flame retardant is decabromodiphenylethane.

3. The varnish composition of claim 1 wherein the initiator is present in the varnish in an amount ranging from 1% to 2% based upon 100 % of reactive component.

4. A copper sheet having a first surface and second surface wherein the first surface includes a b-staged layer of the varnish of claim 1.

5. A prepreg comprising a core material that is impregnated with an at least partially cured varnish of any one of claims 1-3.

6. A laminate including one or more prepregs of claim 5.

## Patentansprüche

1. Lackzusammensetzung, umfassend:
ein Polyphenylenoxidpolymer, welches folgende Formel aufweist: 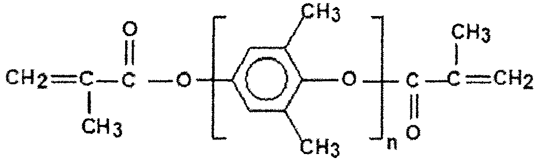
wobei n gleich 1 bis 100 ist;
15 bis 35 Gewichtsprozent einer Trockenmasse bestehend aus mindestens einem reaktiven Monomer; und mindestens einem Initiator;
und worin in der Zusammensetzung auftreten:
30 bis 60 Gewichtsprozent des Polyphenylenoxidpolymers;
0,5 bis 3 Gewichtsprozent eines Initiators, der aus Benzoylperoxid, Dicumylperoxid, 2,5-Dimethyl-2,5-di-t-Butylperoxyhexin, 2,5-Dimethyl-2,5-di-t-Butylperoxyhexan oder einer Kombinationen davon besteht;
5 bis 50 Gewichtsprozent eines Flammschutzmittels, zusammengesetzt aus 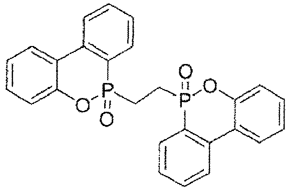 und
Decabromdiphenylethan; und
mehr als 0 und bis zu 30 Gewichtsprozent eines Siliciumdioxidstreckmittels;
wobei es sich in der Zusammensetzung bei mindestens einem reaktiven Monomer um Triallylcyanurat handelt und das Gewichtsverhältnis von Polyphenylenoxidpolymer zu Triallylcyanurat im Bereich von 1,0 bis 3,0 liegt.

2. Lackzusammensetzung gemäß Anspruch 1, wobei das Flammschutzmittel Decabromdiphenylethan ist.

3. Lackzusammensetzung gemäß Anspruch 1, wobei der Initiator im Lack in einer Menge vorhanden ist, die in Bezug auf 100% der reaktiven Komponente im Bereich von 1% bis 2% liegt.

4. Kupferblech mit einer ersten Oberfläche und einer zweiten Oberfläche, wobei die erste Oberfläche eine b-stufige Schicht des Lacks gemäß Anspruch 1 enthält.

5. Prepreg, umfassend ein Kernmaterial, das mit einem zumindest teilweise gehärteten Lack gemäß einem der Ansprüche 1 bis 3 imprägniert ist.

6. Laminat, das ein oder mehrere Prepregs gemäß Anspruch 5 aufweist.

## Revendications

1. Une composition de vernis comprenant :
un polymère d'oxyde de polyphénylène ayant la formule suivante : 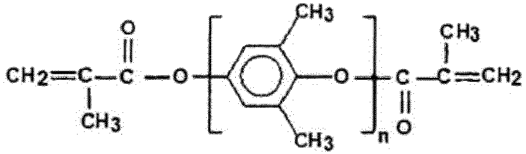
dans laquelle n est compris entre 1 et 100 ;
de 15 à 35 % en poids sur une base sèche d'au moins un monomère réactif ; et au moins un initiateur ;
et dans laquelle la composition contient :
de 30 à 60 % en poids du polymère d'oxyde de polyphénylène ;
de 0,5 à 3 % en poids du au moins un initiateur qui est choisi dans le groupe constitué de peroxyde de benzoyle, peroxyde de dicumyle, 2,5-diméthyl-2,5-di-t-butylperoxyhexyne, 2,5-diméthyl-2,5-di-t-butylperoxyhexane et leurs combinaisons ;
de 5 à 50 % en poids d'au moins un retardateur de flamme choisi parmi 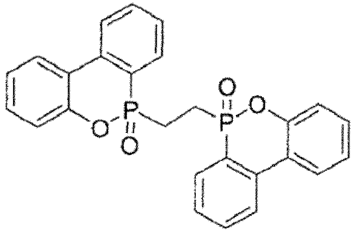 et
décabromodiphényléthane ; et
de plus de 0 à 30 % en poids d'au moins une charge de silice ;
dans laquelle, dans la composition du au moins un monomère réactif est le cyanurate de triallyle et le rapport pondéral du polymère d'oxyde de polyphénylène au cyanurate de triallyle varie de 1,0 à 3,0.

2. La composition de vernis selon la revendication 1, dans laquelle le retardateur de flamme est du décabromodiphényléthane.

3. La composition de vernis selon la revendication 1, dans laquelle l'initiateur est présent dans le vernis en une quantité allant de 1 % à 2 % sur la base de 100 % de composant réactif.

4. Une feuille de cuivre ayant une première surface et une seconde surface, dans laquelle la première surface comprend une couche à l'état b du vernis selon la revendication 1.

5. Un préimprégné comprenant un matériau de noyau qui est imprégné d'un vernis au moins partiellement durci de l'une quelconque des revendications 1-3.

6. Un stratifié comprenant un ou plusieurs préimprégnés selon la revendication 5.
